# EUROPEAN PATENT APPLICATION

(11) **EP 0 915 403 A1**
(43) Date of publication of application: **12.05.1999**
(21) Application number: 98911073.9
(22) Date of filing: 27.03.1998
(51) Int. Cl.: G05B 19/406, G05B 19/18

(54) **NUMERICAL CONTROL UNIT**

(30) Priority: 27.03.1997 JP 91349/97
(71) Applicant: FANUC LTD, Minamitsuru-gun, Yamanashi 401-0597 (JP)
(72) Inventor: MURAOKA, Yutaka Room 14-403 Fanuc Manshion, Minamitsuru-gun Yamanashi 401-0511 (JP); KOIKE, Takeshi Fanuc Dai3virakaramatsu, Yamanashi 401-0511 (JP)
(74) Representative: Billington, Lawrence Emlyn
(86) International application number: JP9801412
(87) International publication number: WO9844397

(57) **Abstract**

A numerical controller capable of properly determining whether parameters for maintaining safety of a machine have been normally loaded into a RAM of the numerical controller. A first parameter set for a CPU (8) for CNC and a second parameter set for a monitor CPU (2) are stored in an SRAM (9) (Both parameter sets are identical in content). At initialization, the first parameter set is loaded into a RAM (7) for the CPU (8) for CNC, and the second parameter set is loaded into a RAM (1) for the monitor CPU (2). Each of the CPU (8) for CNC and the monitor CPU (2) determines whether the first parameter set in the RAM (7) and the second parameter set in the RAM (1) are identical or not, and only when both of the CPU (8) for CNC and the monitor CPU (2) determine that the two parameter sets are identical, system operation programs are started.

## Description

### Technical Field

The present invention relates to a improvement of numerical controller.

### Background Art

There is known a numerical controller in which parameters for maintaining safety of a machine, e.g., parameters related to a revolution speed of a motor, a moving range and the like are stored therein so as to restrict a operation of the machine by monitoring the revolution speed of the motor, the moving rage and the like in operation of the machine.

Such parameters are stored in advance in a non-volatile memory and loaded into a RAM of a CPU as reference data in a starting process of the numerical controller. However, there is a risk that the parameters themselves are destroyed in the non-volatile memory if the non-volatile memory has been damaged or a inadvertent writing operation is performed.

Further, even when the parameters themselves are normally stored in the non-volatile memory, there is a possibility that a data transmission error happens in writing the parameters into the RAM or that the parameters are not correctly written because of an erroneous operation of the CPU. Furthermore, when a system operation program, a application program or the like is loaded in the RAM after the parameters are normally stored in the RAM, if a address specified to store the program is wrong, there is a possibility that the parameters are destroyed in the RAM by unintended overwriting.

When the system operation program is started with the parameters regarding safety of the machine not correctly stored in the RAM, there is a possibility that a motor shaft and other parts of the machine are overloaded or that a interference occurs between movable parts of the machine.

### Disclosure of Invention

An object of the present invention is to provide a numerical controller capable of correctly determining whether or not parameters for maintaining safety of a machine have been properly loaded into a RAM of the numerical controller.

A numerical controller of the present invention comprises: a first CPU; a second CPU; at least one memory for storing a parameter set for the first CPU and a parameter set for the second CPU, the two parameter sets being identical with each other; and at least one memory into which the two parameter sets are loaded when a power source of the numerical controller is turned on. At least one of the first CPU and the second CPU reads the two parameter sets loaded into the memory, to determine whether or not both parameter sets are identical, and a system operation program is started only when both parameter sets are determined to be identical.

Further, the two parameter sets having loaded into the memory are double-checked by the first CPU and the second CPU to determine whether or not the two parameter sets are identical, thereby surely detecting writing errors and data transfer errors caused by a erroneous operation of the CPU and damaged states of local memories. Further, since the two identical parameter are stored in the memory and compared with each other, a parameter set damaged in the memory can be detected.

Further, the first and second parameter sets are loaded into first and second local memories, respectively, by a arrangement such that one of the first CPU and the second CPU reads the two parameter sets stored in the memory and loads one of the two parameter sets into its own local memory and the other into a shared memory, and then the other of the first CPU and the second CPU reads the other of the two parameter sets loaded into the shared memory and loads it into its own local memory.

When it is arranged that the two parameter sets are respectively stored in different chips of the non-volatile memory, a parameter set damaged in the non-volatile memory can be detected more reliably.

### Brief Description of Drawings

FIG. 1 is a block diagram showing a numerical controller according to one embodiment of the present invention;
FIG. 2 is a flowchart schematically showing initialization processing to be performed when power source is turned on; and
FIG. 3 is a subsequent part of the flowchart of FIG. 2.

### Best Mode of Carrying out the Invention

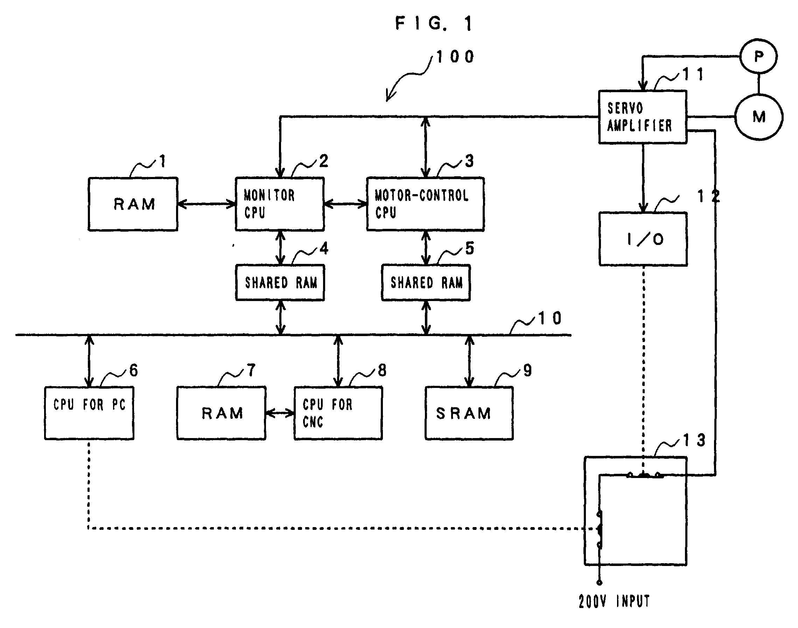

FIG. 1 shows a numerical controller according to an embodiment of the present invention. A numerical controller 100 comprises a CPU 8 for CNC (main CPU) provided for controlling the controller 100 as a whole, a monitor CPU 2 (sub-CPU) provided for monitoring revolution speed of each servomotor for each axis, a destination of movement and the like, ad a motor-control CPU 3 provided for controlling the drive of each servomotor for each axis based on a command from the CPU 8 for CNC, and the input and output of data among the CPU's is performed through a bus 10 and shared RAM's 4 and 5.

The motor-control CPU 3 controls the drive of each servomotor M for each axis through a servo amplifier 11 based on a command from the CPU 8 for CNC, ad a feedback signal from a position/speed detector P provided to each servomotor M for each axis is fed back to the motor-control CPU 3 and the monitor CPU 2. Restrictions are put on a command to be supplied from the motor-control CPU 3 to the servo amplifier 11, by the monitor CPU 2 so that the revolution speed of each servomotor M for each axis and the current position may not exceed their safety values specified by parameters.

Though FIG. 1 shows only one servomotor M for one axis and its position/speed detector P, the number of servomotors and their position/speed detectors varies depending on structure of a machine tool or a industrial robot to be controlled.

To the servo amplifier 11 is provided a interface 12 for on/off-control of a contactor 13, which is provided for supplying power to each servomotor of each axis, so that the motor-control CPU 3, having received an on/off-command from the monitor CPU 2, can perform on/off-control of the contactor 13 through the servo amplifier 11 and the interface 12.

A RAM 7 is a local memory for the CPU 8 for CNC, and a RAM 1 is a local memory for the monitor CPU 2.

A PC (programmable controller) 6 is provided for controlling actuators provided on the machine side based on sequence programs, and is so arranged as to be at least able to perform on/off-control of the contactor 13 for supplying power to each servomotor for each axis.

The motor-control CPU 3 writes, in each predetermined period, information on the position ad speed of each servomotor for each axis in the shared RAM 5, and the CPU 8 for CNC reads, in each predetermined period, the information from the shared RAM 5, whereby restrictions are put on a command to be supplied from the CPU 8 for CNC to the motor-control CPU 3 so that the revolution speed of each servomotor for each axis and the current position will not exceed their safety values specified by parameters.

SRAM 9, a non-volatile memory, are stored with system operation programs, a variety of application programs and the like. In initialisation performed when power source is turned on, those system operation programs, application programs and the like are loaded into the RAM 7 which is the local memory of the CPU 8 for CNC and the RAM 1 which is the local memory of the monitor CPU 7.

Further, in the present embodiment, two sets of parameters for maintaining safety of the machine, for example, parameters specifying safety values of the revolution speed for each servomotor of each axis, a moving range and the like are provided in advance. Each of the parameter sets is provided with an identification code and stored in the SRAM 9. In the following description, the parameter set for the CPU for CNC will be referred to as "first parameter set", and the parameter set for the monitor CPU 2 as "second parameter set". Both the parameter sets are identical in content, though they are provided with different identification codes.

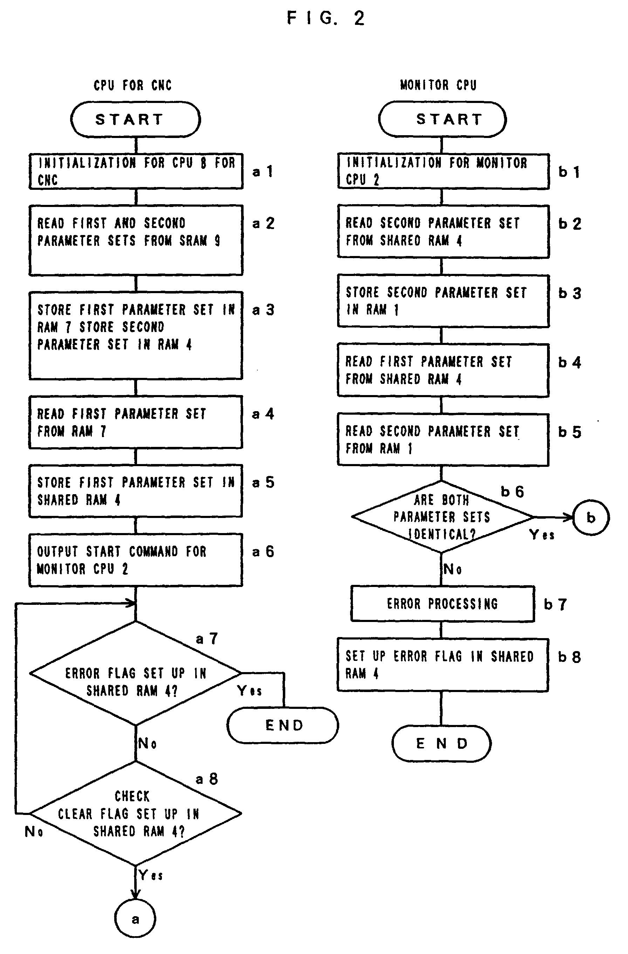

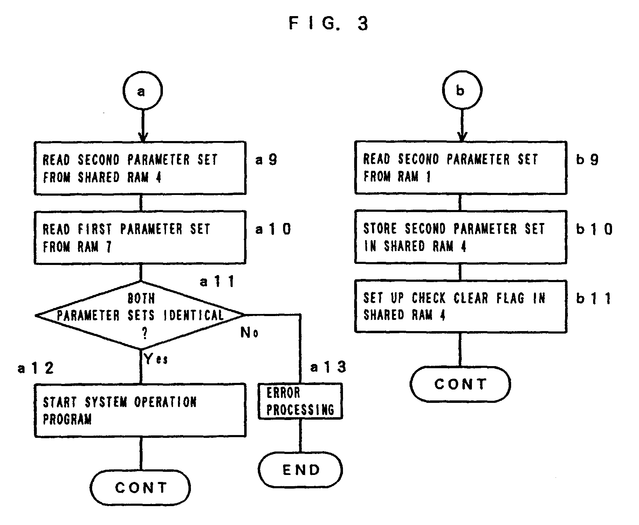

FIGS. 2 and 3 are a flowchart schematically showing processing in the CPU 8 for CNC and the monitor CPU 2 which is performed at the stage of initialization when power source is turned on.

When power source for the numerical controller 100 is turned on, the CPU 8 for CNC not only first reads from the SRAM 9 the system operation programs, various application programs and the like, which are required for processing in the CPU 8 for CNC, to load them into the RAM 7, but also loads application programs, required for processing in the monitor CPU 2, into the shared RAM 4, and starts a parameter check program (Step a1).

Next, the CPU 8 for CNC reads the first parameter set and the second parameter set from the SRAM 9 (Step a2), stores the first parameter set in the RAM 7, which is the local memory of the CPU 8 for CNC, and the second parameter set in a second parameter set storing region in the shared RAM 4 (Step a3), reads the first parameter set again from the RAM 7 (Step a4) and stores it in a first parameter set storing region in the shared RAM 4 (Step a5).

It is for an echo check between the CPU 8 for CNC and the RAM 7 used for a read/write check and for checking whether the RAM 7 is damaged or not that the first parameter set read from the SRAM 9 is once stored in the RAM 7 and then stored again in the first parameter set storing region in the shared RAM 4 (Step a2, Step a3, Step a4); if there is no abnormality, it naturally follows that the first parameter set identical with that originally stored in the SRAM 9 is stored in the first parameter set storing region in the shared RAM 4.

Next, the CPU 8 for CNC writes a start command for the monitor CPU 2 in the shared RAM 5 (Step a6), and enters a stand-by state waiting for the result of comparison by the monitor CPU 2, which determines whether two parameter sets are identical or not, to be written in the shared RAM 4 (Step a7, Step a8).

On the other hand, detecting that a start command is written in the shared RAM 5, the monitor CPU 2 reads various application programs, required for processing by the monitor CPU 2, from the shared RAM 4 to load them into the RAM 1 so that the processing on the monitor CPU 2 side can be performed (Step b1).

Next, the monitor CPU 2 reads the second parameter set from the second parameter set storing region in the shared RAM 4 (Step b2) and stores it in the RAM 1, which is the local memory for the monitor CPU 2 (Step b3). Further, the monitor CPU 2 reads the first parameter set from the first parameter set storing region in the shared RAM 4 and the second parameter set from the RAM 1 (Step b4, Step b5), and determines whether the two parameter sets are identical (Step b6).

In the same way as the case described previously, it is for an echo check between the monitor CPU 2 and the RAM 1 used for a read/write check and for checking whether the RAM 1 is damaged or not that the second parameter set read from the second parameter set storing region in the shared RAM 4 is once stored in the RAM 1, then read anew from the RAM 1 and compared with the first parameter set stored in the first parameter set storing region in the shared RAM 4 (Step b2, Step b3, Step b5); if there is no abnormality naturally, it follows that the second parameter set read from the RAM 1 is identical with the second parameter set originally read from the SRAM 9 and stored in the second parameter set storing region in the shared RAM 4 by the CPU 8 for CNC.

When it is judged in Step b6 that the first parameter set and the second parameter set are identical, the monitor CPU 2 reads the second parameter set from the RAM 1, which is the local memory for the monitor CPU 2 (Step b9), stores it in the second parameter set storing region in the shared RAM 4 (Step b10), and sets up, in the shared RAM 4, a check clear flag, which indicates that the two parameter sets are identical by the comparison performed by the monitor CPU 2 (Step b11), thereby terminating the parameter check on the monitor CPU 2 side.

As is clear from the above, the first parameter set and the second parameter set are compared by the monitor CPU 2 in the determination processing of Step b6, the first parameter set being read by the CPU 8 for CNC from the SRAM 9 to be stored in the RAM 7, the local memory for the CPU 8 for CNC, and then read back again from the RAM 7 to be stored in the first parameter set storing region in the shared RAM 4, and the second parameter set being read by the CPU 8 for CNC from the SRAM 9 to be stored in the second parameter storing region in the shared RAM 4, then read by the monitor CPU 2 from the shared RAM 4 to be stored in the RAM 1, the local memory for the monitor CPU 2, and then read back again by the monitor CPU 2 from the RAM 1.

Therefore, the first and second parameter sets are identical with each other only when the first and second parameter sets as stored in advance in the SRAM 9 are not damaged, a read/write function between the CPU 8 for CNC and the RAM 7 and that between the monitor CPU 2 and the RAM 1 are normal, and the RAM 7 and the RAM 1 are not damaged.

There remains, however, a possibility that, due to false operation of the monitor CPU 2 itself as a determination means, the two parameter sets are erroneously determined to be identical despite that they are not identical actually.

If it is determined in the determination processing of Step b6 that the first and second parameter sets are not identical, the monitor CPU 2 turns off the power supply to the contactor 13 through the monitor-control CPU 3, the servo amplifier 11 and the interface 12 to prohibit the operation of each servomotor of each axis (Step b7), and sets up, in the shared RAM 4, an error flag which indicates that the two parameter sets are not identical according to the result of the comparison of the parameter sets by the monitor CPU 2 (Step b8), thereby terminating the parameter check on the monitor CPU 2 side.

When the error flag is set up in the shared RAM 4, the CPU 8 for CNC detects it in determination processing in Step a7 and cancels processings in Step a9 and succeeding Steps, thereby terminating the processing on the side of the CPU 8 for CNC without proceeding further. Consequently, the processing in Step a12, which will be described later, will not be performed, so that the system operation programs will not be started.

This means that the system operation programs will not operate when there is abnormality as to the read/write function between the CPU 8 for CNC and the RAM 7 and as to that between the monitor CPU 2 and the RAM 1, or as to the RAM 7 and RAM 1 or when any one of the first and second parameter sets stored in advance in the SRAM 9 is damaged.

When the check clear flag is set up in the shared RAM 4, the CPU 8 for CNC detects it by determination processing in Step a8 and starts processing for ascertaining whether the above determination on the monitor CPU 2 side is reliable or not.

First, the CPU 8 for CNC reads the second parameter set from the second parameter set storing region in the shared RAM 4, and the first parameter set from the RAM 7, which is the local memory for the CPU 8 CNC (Step a9, Step a10), and determines whether both parameter sets are identical (Step a11).

If the parameter sets are identical, the CPU 8 for CNC starts the system operation programs stored in the RAM 7, and allows the acceptance of the input operation by an operator and the start of the internal processing based thereon (Step a12).

Compared by the CPU 8 for CNC in the determination processing in Step a11 are the first parameter set and the second parameter set, the second parameter set being read by the CPU 8 for CNC from the SRAM 9 and stored in the second parameter storing region in the shared RAM 4, then read by the monitor CPU 2 from the shared RAM 4 and stored in the RAM 1, which is the local memory for the monitor CPU 2, and then read back again by the monitor CPU 2 from the RAM 1 and stored in the second parameter set storing region in the shared RAM 4, and the first parameter set being read by the CPU 8 for CNC from the SRAM 9 and stored in the RAM 7, which is the local memory for the CPU 8 for CNC, and then read back again by the CPU 8 for CNC from the RAM 7.

Therefore, the first and second parameter sets are identical with each other only when the first and second parameter sets as stored in advance in the SRAM 9 are not damaged, a read/write function between the CPU 8 for CNC and the RAM 7 and between the monitor CPU 2 and the RAM 1 is normal, and the RAM 7 and the RAM 1 are not damaged.

In the same way as in the above described determination processing on the monitor CPU 2 side, there remains a possibility that, due to false operation of the CPU 8 for CNC, which is a determination means, the two parameter sets are determined to be identical despite they are actually not identical. However, there is an extremely low probability that both the monitor CPU 2 and the CPU 8 for CNC do false operation at the same time in the processing on the monitor CPU 2 side in the above described Step b6 and in the processing on the CPU 8 for CNC side in Step a11. Therefore, there is little possibility that the system operation programs are inadvertently started by reasons that any one of the first and second parameter sets stored in advance in the SRAM 9 is damaged, or there is abnormality as to the read/write function between the CPU 8 for CNC and the RAM 7 or between the monitor CPU 2 and the RAM 1, or the RAM 7 or the RAM 1 is damaged.

Further, the first and second parameter sets compared in both the processing of Step b6 and the processing of Step a11 are those which have been once stored by the CPU 8 and CPU 2 in their local memories 7 and 1 and read back therefrom respectively by the CPU 8 and CPU 2. Therefore, as long as the determination in Step a11 is "yes", it assures that the first and second parameter sets are normally stored in the local memory 7 of the CPU 8 for CNC and the local memory 1 of the monitor CPU 2, respectively, and that they are identical. Therefore, the CPU 8 for CNC refers to the first parameter set stored in its local memory 7 to monitor the revolution speed of each servomotor of each axis, the destination of movement and the like, and, at the same time, the CPU 2 for the monitor refers to the second parameter set, loaded into the local memory 1, to monitor the revolution speed of the motor of each axis, the destination of the movement and the like, whereby the safety of the machine can be reliably maintained during work.

Further, processing for ascertaining whether the first parameter set stored in the local memory 7 and the second parameter set stored in the local memory 1 are identical or not is performed after the system operation programs, application programs and the like have been loaded into the local memory 7 and the local memory 1. Therefore, it can be prevented that the first parameter set stored in the local memory 7 and the second parameter set stored in the local memory 1 are damaged by overwriting of other data.

If the determination in Step a11 is "no", that is, if it is determined that the first and second parameter sets are not identical, the CPU 8 for CNC interprets that the determination on the monitor CPU 2 side is false, ad cuts off the power supply to the contactor 13 through the CPU 6 for PC, whereby stop the operation of each servomotor of each axis (Step a13) is prohibited, and the parameter check on the CPU 8 for CNC side is brought to a end. Naturally, the system operation programs stored in the RAM 7 will not be started in this case.

The above embodiment is designed so that, when the monitor CPU 2 determines in Step b6 that the first parameter set read from the shared RAM 4 and the second parameter set read from the RAM 1 are identical, the CPU 8 for CNC further determines whether the second parameter set read from the shared RAM 4 and the first parameter set read from the RAM 7 are identical or not. Alternatively, however, the present invention may be arranged so that, when the first parameter set and the second parameter set are judged to be identical by any one of the monitor CPU 2 and the CPU 8 for CNC, the system operation programs, stored in the RAM 7, are started to allow the input operation by an operator and the start of the internal operation based thereon.

Further, it may be designed alternatively so that the CPU 8 for CNC reads the first and second parameter sets stored in the SRAM 9 and stores the first parameter set in the RAM 7, which is the local memory for the CPU 8 for CNC and the second parameter set in the second parameter set storing region in the shared RAM 4; then the monitor CPU 2 reads the second parameter set stored in the shared RAM 4 and stores it in the RAM 1, which is the local memory for the monitor CPU 2; the monitor CPU 2 reads the first and second parameter sets from the SRAM 9 and stores the second parameter set in the RAM 1 and the first parameter set in the first parameter set storing region in the shared RAM 4; and then the CPU 8 for CNC reads the first parameter set stored in the shared RAM 4 and stores it in the RAM 7.

In the above embodiment, the first and second parameter sets are stored in the same SRAM 9; alternatively, however, the first and second parameter sets may be stored in different non-volatile memories, if two or more non-volatile memories are provided in the numerical controller 100. Anyway, if one of the parameter sets is damaged, the determinations in Step b6 and Step 11a are "no", so that it is not possible to read the other normal parameter set to thereby start the system operation programs. However, at least it is possible to avoid an error such that the first and second parameter sets stored in the same SRAM 9 are compared and determined to be normal, despite that they have been damaged in the same way.

Further, the present invention may be so arranged that the first and second parameter sets are represented by ECC codes and stored in the SRAM 9 or the like, error check and correction of those parameter sets are performed by the CPU 8 for CNC at the initialization of the system, or, more specifically, between Step a2 and Step a3, and then the first and second parameter sets are stored in the RAM 7 and the shared RAM 4. In this case, even when one or both of the parameter sets stored in the SRAM 9 or the like have been damaged, the system operation programs can be started if the parameter sets are repaired to be normal by the above error correction so that the determinations in Step b6 and Step a11 become "yes".

With the numerical controller of the present invention, it is possible to properly determine whether parameters for maintaining safety with a machine have been normally loaded into a RAM of the numerical controller, and to automatically prohibit the start of system operation programs if there is something abnormal in the parameters.

Further, whether two parameter sets are normal or not is determined by confirming whether they are identical or not after they have been once loaded into a local memory of a main CPU and a local memory of a sub-CPU, respectively. Therefore, even when abnormal transmission of data happens between the CPU's and their local memories or there is something abnormal in the local memories themselves, or when the parameters can be normally loaded into the local memories but can not be normally read therefrom, it is possible to automatically prohibit the start of system operation programs to thereby maintain the safety of a motor shaft and other parts of a machine.

Furthermore, it is arranged that two sets of parameters are separatively stored in different chips of a non-volatile memory, so that the two sets of parameters are prevented from being damaged in the same way, whereby abnormality of the parameters can be detected more reliably by comparison of the two sets thereof.

## Claims

1. A numerical controller for controlling a machine, comprising:
a first CPU;
a second CPU;
at least one non-volatile memory for storing a parameter set for said first CPU and a parameter set for said second CPU, said two parameter sets being identical with each other; and
at least one memory into which said two parameter sets are loaded when a power source of the numerical controller is turned on;
wherein at least one of said first CPU and said second CPU reads said two parameter sets loaded into said memory and determines whether or not both parameter sets are identical, and a system operation program is started only when both parameter sets are determined to be identical.

2. A numerical controller according to claim 1, wherein said memory comprises a local memory for said first CPU and a local memory for said second CPU.

3. A numerical controller for controlling a machine, comprising:
a first CPU;
a second CPU;
at least one non-volatile memory for storing a parameter set for said first CPU and a parameter set for said second CPU, said two parameter sets being identical with each other; and
at least one memory into which said two parameter sets are loaded when a power source of the numerical controller is turned on;
wherein said first CPU and said second CPU respectively read said two parameter sets loaded into said memory and respectively determine whether or not both parameter sets are identical, and a system operation programs is started only when both of said first CPU and said second CPU determine that two parameter sets are identical.

4. A numerical controller according to claim 3, wherein said memory comprises a local memory for said first CPU and a local memory for said second CPU.

5. A numerical controller according to claim 4, wherein one of said first CPU and said second CPU reads the two parameter sets stored in said non-volatile memory, and loads one of the two parameter sets into the local memory for said one CPU and the other one of the two parameter sets into a shared memory, and the other of said first CPU and said second CPU reads the other of the parameter sets loaded into the shared memory and loads the other of the parameter sets into the local memory for said other CPU.

6. A numerical controller according to any one of claims 3 to 5, wherein said first parameter set and said second parameter set are separately stored in different chips of the non-volatile memory.

7. A numerical controller for controlling a machine based on a system operation program, comprising:
a first CPU for generally controlling the numerical controller;
a second CPU for monitoring operation of a motor for driving the machine to maintain safety of the machine;
at least one non-volatile memory for storing a first parameter set for said first CPU and a second parameter set for said second CPU, said two parameter sets being identical with each other and prepared for maintaining safety of the machine; and
a first local memory into which said first parameter set is loaded at an initialization stage when a power source of the numerical controller is turned on, said first local memory being connected to said first CPU;
a second local memory into which said second parameter set is loaded, said second local memory being connected to said second CPU; and
a shared memory into which said first parameter set loaded into said first local memory and said second parameter set loaded into said second parameter set are loaded;
wherein said first CPU compares the first parameter set loaded into said first local memory with the second parameter set loaded into said shared memory, said second CPU compares the second parameter set loaded into said second local memory with the first parameter set loaded into said shared memory, and said first CPU starts the system operation program only when the first parameter set loaded into the first local memory and the second parameter set loaded into said shared memory are identical with each other, and the second parameter set loaded into said second local memory and the first parameter set loaded into said shared memory are identical with each other.

8. A numerical controller according to claim 7, wherein said first CPU reads said first and second parameter sets stored in said non-volatile memory and loads said first parameter set into said first local memory and said second parameter set into said shared memory, and said second CPU reads the second parameter set loaded into said shared memory and loads the second parameter set into said second local memory.

9. A numerical controller according to claim 7, wherein said second CPU reads said first and second parameter sets stored in said non-volatile memory and loads said second parameter set into said second local memory and said first parameter set into said shared memory, and said first CPU reads the first parameter set loaded into said shared memory and loads the first parameter set into said first local memory.

10. A numerical controller according to any one of claims 7 to 9, wherein said first and second parameter sets are separately stored in different chips of the non-volatile memory.
